# EUROPÄISCHE PATENTANMELDUNG

(11) **EP 4 156 362 A1**
(43) Veröffentlichungstag der Anmeldung: **29.03.2023**
(21) Anmeldenummer: 21199309.2
(22) Anmeldetag: 28.09.2021
(51) Int. Cl.: H01M 10/0525, H01M 50/204, H01M 50/24, H01M 50/271, H01M 50/30, H01M 50/502

(54) **BATTERIESPEICHERSYSTEM MIT MINDESTENS ZWEI BATTERIEMODULEN**

(71) Anmelder: VARTA Microbattery GmbH, 73479 Ellwangen Jagst (DE)
(72) Erfinder: Burow, Simon, 73447 Oberkochen (DE); Kloos, Dieter, 74579 Fichtenau (DE); Stübler, Roman, 73466 Lauchheim (DE)
(74) Vertreter: Ostertag & Partner Patentanwälte mbB

(57) **Zusammenfassung**

Ein Batteriespeichersystem (100) weist mindestens zwei Batteriemodule (10), diejeweils eine Mehrzahl von elektrochemischen Energiespeicherzellen aufweisen, und gegebenenfalls ein Bodenteil (50) und/oder ein Deckelteil (60) auf. Jedes Batteriemodul (10) weist mindestens eine außenseitige Kontaktiereinrichtung (11, 12) zur Verbindung mit einem anderen Batteriemodul (10) des Batteriespeichersystems und/oder gegebenenfalls mit dem Bodenteil (50) und/oderdem Deckelteil (60) des Batteriespeichersystems auf. Die Kontaktiereinrichtungen (11, 12) umfassen mindestens einen, vorzugsweise mehrere Anschlüsse für Leistung und/oder Datensignale. Benachbarte Batteriemodule (10) innerhalb des Batteriespeichersystems (100) sind über die Kontaktiereinrichtungen (11, 12) elektrisch miteinander verbunden. Das Batteriespeichersystem zeichnet sich dadurch aus, dass die Kontaktiereinrichtungen (11, 12) jeweils von einer umlaufenden mechanischen Führung (14) umgeben sind und dass im Bereich der Kontaktiereinrichtungen (11, 12) innerhalb der umlaufenden mechanischen Führung (14) mindestens eine Gasdurchtrittsöffnung (13) vorgesehen ist, über die ein Gasaustausch zwischen benachbarten Batteriemodulen (10) stattfinden kann. Dieser Gasaustausch kann zu Zwecken der Kühlung und/oderzu Zwecken eines Rauchgasmanagements genutzt werden.

## Beschreibung

Die vorliegende Erfindung betrifft ein Batteriespeichersystem mit mindestens zwei Batteriemodulen, die jeweils eine Mehrzahl von elektrochemischen Energiespeicherzellen aufweisen. Weiterhin betrifftdie Erfindungein Batteriemodul, das insbesondere in einem solchen Batteriespeichersystem einsetzbar oder als *Standalone*-Batteriemodul genutzt werden kann.

### ANWENDUNGSGEBIET UND STAND DER TECHNIK

Eine Batterie ist ein Speicher für elektrische Energie, der aus einer Mehrzahl von elektrochemischen Energiespeicherzellen aufgebaut ist. Größere Batterien sind meist aus Batteriemodulen zusammengesetzt, die entweder einzelne Energiespeicherzellen oder mehrere, miteinander verschaltete Energiespeicherzellen umfassen können. Die Anzahl der von einem Batteriemodul umfassten Energiespeicherzellen hängt von den jeweils benötigten Strömen und Spannungen ab. Für Anwendungen im Bereich der Elektromobilität oder für große stationäre Energiespeicher werden in der Regel sehr große Ströme und hohe Spannungen und entsprechend viele Energiespeicherzellen benötigt.

Jede elektrochemische Energiespeicherzelle im Sinne der vorliegenden Anmeldung umfasst mindestens eine positive und mindestens eine negative Elektrode, welche durch einen Separator voneinander getrennt sind. In elektrochemischen Energiespeicherzellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab. Die andere Teilreaktion läuft bei vergleichsweise höherem Redoxpotential an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem, der Elektrodenreaktion entsprechenden lonenstrom innerhalb der elektrochemischen Energiespeicherzelle. Dieser lonenstrom durchquert den Separator und wird durch einen ionenleitenden Elektrolyten ermöglicht.

In sekundären (wieder aufladbaren) elektrochemischen Energiespeicherzellen ist diese Entladereaktion reversibel, es besteht also die Möglichkeit, die bei der Entladung erfolgte Umwandlung chemischer Energie in elektrische Energie umzukehren.

Eine in Batteriemodulen oftmals verwendete elektrochemische Energiespeicherzelle istdie Lithiumlonen-Zelle. Diese umfasst Elektroden, die Lithiumionen reversibel aufnehmen und wieder abgeben können, sowie einen Lithiumionen enthaltenden Elektrolyten.

Batteriemodule haben oftmals ein kubisches Gehäuse mit einer rechteckigen Oberseite und einer rechteckigen Unterseite und vier rechteckigen Seitenwänden. Bei der Montage der Batteriemodule zu einer Batterie beziehungsweise zu einem Batteriespeichersystem ist es in der Regel vorgesehen, dass die Batteriemodule nebeneinander oder in gestapelter Form ausgerichtet werden, um dann entsprechend verschaltet werden zu können.

Bei dem Betrieb von elektrochemischen Zellen und insbesondere bei dem Betrieb eines Batteriemoduls entsteht Wärme. Sowohl bei der Energieabgabe als auch beim Laden erwärmen sich die Zellen. Eine Überhitzung kann zu Beeinträchtigungen und Schädigungen der elektrochemischen Zellen führen. Allerdings kann auch eine zu niedrige Temperatur beispielsweise den Ladevorgang negativ beeinflussen. Für einen sicheren und schonenden Betrieb des Batteriemoduls sollte daherein gewisser Betriebstemperaturbereich eingehalten werden, so dass Maßnahmen zur Temperierung von Batteriemodulen und insbesondere zur Kühlung sinnvoll sind.

Es ist bekannt, Kühl- und Kältekreisläufe einzusetzen, um die sich im Betrieb erwärmenden elektrochemischen Zellen eines Batteriemoduls zu kühlen. Beispielsweise können Kühl- oder Kälteplatten verwendet werden, auf die die Batteriemodule mit ihrer Unterseite zur Wärmeabfuhr gepresst werden.

Andere Ansätze arbeiten mit der Einleitung eines flüssigen Kühlmediums direkt in das Batteriemodul. Aus der DE 10 2007 024 869 A ist beispielsweise ein Batteriemodul für Elektrogeräte bekannt, wobei ein Kühlmedium durch das Gehäuse des Moduls geleitet wird.

Weiterhin ist eine Luftkühlung von Batteriemodulen bekannt. So beschreibt die WO 2013/023847 A1 ein Batteriemodul insbesondere für Kraftfahrzeuge mit einem Batteriezellenstapel aus vorzugsweise prismatischen Batteriezellen, wobei sich zwischen den Batteriezellen Luftkanäle befinden. Hierdurch soll eine ausreichende Kühlung der Batteriezellen mittels eines Luftstroms ermöglicht werden.

Die DE 10 2014 201 165 A1 schlägt ein Batteriemodul vor, welches eine Anzahl von elektrisch miteinander verschalteten Batteriezellen umfasst. Die einzelnen Batteriezellen werden durch eine Luftströmung temperiert, die Kanäle durchströmt, die sich im Wesentlichen entlang der Batteriezellen erstrecken. Die Batteriezellen sind in einzelnen Batteriezellenfächern eines Batteriezellenhalters untergebracht. In den Seitenwänden der Batteriezellenfächer befinden sich die Kanäle, die von der Kühlluft durchströmt werden. Für eine ausreichende Kühlwirkung muss das Material des Batteriezellenhalters gute Wärmeleiteigenschaften aufweisen.

Die DE 20 2018 005 411 U1 beschreibt ein Batteriemodul mit zylindrischen Rundzellen ohne ein herkömmlicherweise verwendetes Gehäuse, wobei die Gehäusefunktionen von einer selbsttragenden Haltematrix aus Kunststoff übernommen werden. Einzelne Module können zu sogenannten Batteriepacks zusammengesteckt werden. Hierbei kann die flächige Distanz zwischen zwei Ebenen der zusammengesteckten Module als Luftkanal für eine Luftkühlung genutzt werden.

Neben einer guten Kühlung der Energiespeicherzellen in den Batteriemodulen eines aus mehreren Batteriemodulen zusammengesetzten Batteriespeichersystems besteht weiterhin im Allgemeinen die Anforderung, dass das Energiespeichersystem, je nach vorgesehener IP-Schutzklasse (IP - *International Protection),* hermetisch dicht sein sollte. Weiterhin sollte eine elektrische Isolationsfestigkeit gewährleistet sein. Im Hinblick auf die elektromagnetische Verträglichkeit sollten die parasitären Kapazitäten zwischen den Energiespeicherzellen und dem Gehäuse möglichst klein sein.

Diese Aspekte können vor allen Dingen wichtig sein, um die Vorgaben von verschiedenen IP-Schutzklassen für derartige Systeme zu erfüllen, wobei in diesen Schutzklassen bestimmte Sicherheitsmaßnahmen und -vorgabenfür bestimmte Geräte und Vorrichtungen definiert sind.

In dieser Hinsicht ist eine herkömmliche Luftkühlung bei Energiespeichersystemen, bei der die Luft von einem integrierten Lüfter aus der Umwelt angesaugt und durch das oder die Batteriemodule geleitet und anschließend erwärmt wieder abgegeben wird, wegen der Forderung nach Wasser- und Staubdichtigkeit gegebenenfalls nicht geeignet.

Andere Lösungen zur Kühlung der Zellen, die mit wärmeleitenden Materialien und Strukturen die Verlustwärme von den Energiespeicherzellen zur Gehäuseoberfläche transportieren, sind in der Regel in der Umsetzung aufwendig und kostenintensiv. Weiterhin ist es im Allgemeinen bei der Verwendung von wärmeleitenden Materialien zweckmäßig, wenn die Abstände zwischen den Energiespeicherzellen und der kühlenden Gehäusewandung möglichst klein sind. Dies widerspricht jedoch der Forderung nach hoher Isolationsfestigkeit und geringen, parasitären Kapazitäten.

Eine Flüssigkeitskühlung ist mit anderen Schwierigkeiten verbunden, da die herkömmlichen wasserbasierten Kühlmittel in der Regel elektrisch leitfähig sind und daher mit Isolationsproblemen einhergehen. Insofern stellt eine Abführungvon Wärme bei unter hohen Spannungen stehenden Teilen mittels einer Flüssigkeitskühlung in der Regel eine große Herausforderung dar, die mit aufwendigen technischen Maßnahmen verbunden ist.

Ein weiterer wichtiger Punkt ist der möglicherweise im System auftretende Druck, der entstehen kann, wenn einzelne Energiespeicherzellen beispielsweise überladen sind oder ein Kurzschluss auftritt. Die dabei entstehenden brennbaren Gase (Rauchgase) sollten im Sinne der Sicherheit und des Brandschutzes unter Kontrolle gehalten werden können.

Eine besondere Herausforderung stellen vor allem großformatige Batteriemodule f(etwa 100 Wh bis kWh) im Hinblick auf eine Brandverhütung dar. Schadhafte Energiespeicherzellen bergen prinzipiell das Problem, thermisch so auffällig zu werden, dass heiße Gase aus ihnen austreten und sich entzünden können. Bei Energiespeicherzellen ist daher sicherzustellen, dass kein Feuer aus dem System austreten kann und dass sich ein möglicher Brand innerhalb eines Batteriemoduls nicht auf benachbarte Batteriemodule ausdehnen kann.

### AUFGABE UND LÖSUNG

Herkömmliche Energiespeichersysteme bieten insbesondere im Hinblick auf diese angesprochenen Aspekte in der Regel keine befriedigenden Lösungen. Die vorliegende Erfindung stellt sich daher die Aufgabe, ein verbessertes Energiespeichersystem bereitzustellen, das den genannten Anforderungen an ein leistungsfähiges und sicheres Energiespeichersystem bei gleichzeitig verhältnismäßig einfachem Aufbau Genüge tut.

Diese Aufgabe wird durch ein Batteriespeichersystem gelöst, das sich aus Anspruch 1 ergibt. Weiterhin wird die Aufgabe durch ein Batteriemodul gemäß dem weiteren unabhängigen Anspruch gelöst. Bevorzugte Ausgestaltungen des Batteriespeichersystems beziehungsweise des Batteriemoduls ergeben sich aus den abhängigen Ansprüchen.

Das erfindungsgemäße Batteriespeichersystem ist aus mindestens zwei Batteriemodulen aufgebaut, wobei die einzelnen Batteriemodule jeweils eine Mehrzahl von elektrochemischen Energiespeicherzellen aufweisen. Darüber hinaus kann das Batteriespeichersystem gegebenenfalls ein Deckelteil und/oder ein Bodenteil aufweisen, wie es von herkömmlichen Batteriespeichersystemen bekannt ist. Das erfindungsgemäße Batteriespeichersystem weist zunächst die folgenden Merkmale a. bis c. auf:
a. Jedes Batteriemodul weist mindestens eine außenseitige Kontaktiereinrichtung zur Verbindung mit einem anderen Batteriemodul des Batteriespeichersystems und/oder gegebenenfalls mit dem Bodenteil und/oder dem Deckelteil des Batteriespeichersystems auf,
b. die Kontaktiereinrichtungen umfassen mindestens einen, vorzugsweise mehrere Anschlüsse für Leistung und/oder Datensignale,
c. benachbarte Batteriemodule innerhalb des Batteriespeichersystems sind über die Kontaktiereinrichtungen elektrisch miteinander verbunden,

Weiterhin ist das erfindungsgemäße Energiespeichersystem durch die folgenden Merkmale d. und e. gekennzeichnet:
d. die Kontaktiereinrichtungen sind jeweils von einer umlaufenden mechanischen Führung umgeben, und
e. im Bereich der Kontaktiereinrichtungen innerhalb der umlaufenden mechanischen Führung ist mindestens eine Gasdurchtrittsöffnung vorgesehen.

Wie auch bei einem herkömmlichen Batteriespeichersystem können die einzelnen Batteriemodule des Systems beispielsweise gestapelt und/oder aneinandergereiht werden. Die Kontaktiereinrichtungen der einzelnen Batteriemodule sind so ausgebildet, dass die benachbarten Batteriemodule darüber miteinander verschaltet werden können. Hierbei sind an sich bekannte Anschlüsse für Leistung und/oder für Datensignale vorgesehen, vorzugsweise für Leistung und für Datensignale.

Insbesondere im Fall eines gestapelten Systems können ein Bodenteil und ein Deckelteil (Oberteil) vorgesehen sein. Die Anschlüsse des Stapels können beispielsweise am oberen Deckelteil zugänglich gemacht werden, während das Bodenteil beispielsweise nur die Verbindungstechnik enthält. Prinzipiell ist jedoch die Wahl der Stelle der Anschlüsse für Leistung und Datensignale je nach den Gegebenheiten und Anforderungen frei wählbar und ist beispielsweise auch im Bodenteil möglich. Bei gereihten Systemen können entsprechende seitliche Teile vorgesehen sein.

Ein Kernpunkt der Erfindung ist, dass die Kontaktiereinrichtungen jeweils von einer umlaufenden mechanischen Führung umgeben sind und dass innerhalb der umlaufenden mechanischen Führung mindestens eine Gasdurchtrittsöffnung vorgesehen ist. Allgemein ist unter einer Gasdurchtrittsöffnung eine Öffnung oder eine Durchbrechung in der Wandung des Batteriemoduls im Bereich der Kontaktiereinrichtung zu verstehen, die einen Gasdurchtritt erlaubt.

Die Gasdurchtrittsöffnungen stellen durch das gesamte Energiespeichersystem hindurch über die verschiedenen Batteriemodule hinweg einen Pfad für Kühlluft bereit. Zugleich oder gegebenenfalls alternativ kann der durch die Gasdurchtrittsöffnungen bereitgestellte Pfad auch für die Verteilung und Ableitung von Rauchgasen, die gegebenenfalls auftreten, in sehr vorteilhafter Weise genutzt werden. Die Erfindung nutzt die in der Regel ohnehin vorhandenen Kontaktiereinrichtungen, die zum Verschalten der einzelnen Batteriemodule vorgesehen sind, für die Integration von Gasdurchtrittsöffnungen zwischen den einzelnen Batteriemodulen.

Die Gasdurchtrittsöffnungen stellen Durchbrechungen in der Gehäusewandung des jeweiligen Batteriemoduls im Bereich, der von der umlaufenden mechanischen Führung der Kontaktiereinrichtung umgeben ist, dar. Die Gasdurchtrittsöffnungen können beispielsweise eine runde oder kreisrunde Form aufweisen. In anderen Ausgestaltungen können sie im Prinzip jede andere Form aufweisen, beispielsweise Schlitze oder ähnliches. In bevorzugten Ausgestaltungen können die Gasdurchtrittsöffnungen auch von einer Gitterstruktur gebildet werden.

Da sich die Gasdurchtrittsöffnungen innerhalb der umlaufenden mechanischen Führungen der Kontaktiereinrichtungen befinden, wird durch die Verbindung der benachbarten Batteriemodule über die Kontaktiereinrichtungen gleichzeitig der Gasdurchtritt zwischen den benachbarten Batteriemodulen ermöglicht. Das erfindungsgemäße Batteriespeichersystem erlaubt damit in sehr vorteilhafter Weise eine Führung von Kühlluft oder eines anderen Kühlmediums und/oder gegebenenfalls von Rauchgasen, ohne dass bei der Montage zusätzliche, aufwendige Maßnahmen erforderlich wären. Die Erfindung erleichtert damit zum einen die Kühlung von derartigen Batteriespeichersystemen und ermöglicht zum anderen eine effektives Rauchgasmanagement, um möglicherweise auftretende Batteriebrände zu verhindern oder in ihren Auswirkungen zu begrenzen.

In besonders bevorzugter Weise handelt es sich bei den Kontaktiereinrichtungen der Batteriemodule um Steckverbinder. Vom prinzipiellen Aufbau her sind derartige Steckverbinder für die Kontaktierung von benachbarten Batteriemodulen in einem Batteriespeichersystem als Verbindungselemente für Leistung und/oder Datensignale bekannt.

Vorteilhafterweise sind die jeweiligen Kontaktiereinrichtungen, die zum Ineinanderstecken vorgesehen sind, komplementär zueinander ausgebildet. Zum Beispiel sind die Steckelemente der Kontaktiereinrichtung an einer Seite eines ersten Batteriemoduls weiblich und die Steckelemente der Kontaktiereinrichtung auf derjenigen Seite eines benachbarten zweiten Batteriemoduls, das mit dem ersten Batteriemodul verbunden werden soll, männlich.

Insbesondere zum Schutz der Steckverbindungen beziehungsweise der Steckelemente weisen die Kontaktiereinrichtungen eine umlaufende mechanische Führung auf, die stabil ist und die die Verbindungen vor mechanischen Beschädigungen, eintretendem Staub oder Wasser oder ähnlichem schützt.

In besonders bevorzugter Weise zeichnet sich das Batteriespeichersystem durch das folgende zusätzliche Merkmal aus:
a. Die mechanischen Führungen der Kontaktiereinrichtungen, über die benachbarte Batteriemodule miteinander verbunden sind, greifen formschlüssig ineinander.

Durch einen formschlüssigen Eingriff der mechanischen Führungen von benachbarten Batteriemodulen ist ein Zusammenstecken der Batteriemodule in besonders einfacher Weise möglich. Durch eine entsprechende Ausbildung der mechanischen Führungen wird zugleich verhindert, dass nicht zueinander passende Kontaktiereinrichtungen miteinander verbunden werden. Sie können also nur ineinandergeschoben werden, wenn sich die passenden Verbinder einander gegenüber befinden, beispielsweise eine Kontaktiereinrichtung auf der Rückseite eines Moduls und eine Kontaktiereinrichtung auf der Vorderseite eines benachbarten Moduls. Hierfür ist zweckmäßigerweise eine der beiden mechanischen Führungen kleiner gestaltet als das Gegenstück, so dass das Ineinanderschieben mechanisch sehr einfach möglich ist. Eine derartige Ausgestaltung der mechanischen Führungen erfüllt damit auch die Funktion eines Schutzes gegen falsches Stecken.

In besonders bevorzugter Weise zeichnet sich das Batteriespeichersystem weiterhin durch das folgende zusätzliche Merkmal aus:
a. Die mechanischen Führungen sind zur Abdichtung der Kontaktiereinrichtungen eingerichtet.

Durch die Abdichtung der Kontaktiereinrichtungen wird beispielsweise eine Dichtung gegenüber Gas, Feuchtigkeit und/oder Staub gewährleistet. Die Abdichtung stellt darüber hinaus auch den sicher geführten Gasdurchtritt sicher, so dass insbesondere eine Zwangskühlung bei gleichzeitig gegebener Dichtigkeit ermöglicht wird, die beispielsweise auch die Vorgaben nach verschiedenen IP-Schutzklassen erfüllen kann.

Die Dichtigkeit kann beispielsweise bereits durch die bevorzugte formschlüssige Verbindung bei den mechanischen Führungen gewährleistet werden.

In besonders bevorzugten Ausführungsformen zeichnet sich das Batteriespeichersystem insbesondere im Hinblick auf die Abdichtung durch mindestens eines der folgenden zusätzlichen Merkmale aus:
a. Die mechanischen Führungen umfassen zumindest teilweise eine umlaufende Dichtlippe, die mechanischen Führungen umfassen zumindest teilweise eine Dichtungsmasse.

Durch eine beispielsweise umlaufende Dichtlippe, beispielsweise aus einem elastischen Kunststoff oder Gummi, und/oder durch eine übliche Dichtungsmasse im Bereich der mechanischen Führungen kann eine sehr sichere Abdichtung erreicht werden.

Je nach zu realisierender IP-Schutzklasse kann auch eine hermetische Dichtigkeit gefordert sein, die insbesondere durch eine Dichtlippe oder eine Dichtungsmasse erreicht werden kann. Sofern keine hermetische Dichtigkeit gefordert ist, kann unter Umständen bereits eine formschlüssige Verbindung für die Dichtigkeit ausreichend sein. Je nach Anwendung kann beispielsweise ein Schutz gegen Eindringen von Wasser genügen.

Bei einer Stapelung der Batteriemodule zur Ausbildung des Batteriespeichersystems kann bereits alleine das Gewicht der Batteriemodule ausreichend sein, um einen derartigen mechanischen Druck für die Abdichtung durch die formschlüssige Verbindung und/oder gegebenenfalls für die Abdichtung mittels Gummilippen, Dichtungsmassen oder Ähnlichem zu erreichen, der eine weitere mechanische Fixierung, beispielsweise mittels Schrauben, Klammern oder Haltefedern, zur Sicherstellung einer Dichtigkeit überflüssig macht. Hierdurch wird auf der einen Seite die Montage weiter vereinfacht, da ein zusätzlicher Fixierungsschritt nicht erforderlich ist. Zum anderen wird auch eine weitere Fehlerquelle bei der Montage durch den Verzicht auf einen zusätzlichen Fixierungsschritt vermieden.

In bevorzugten Ausgestaltungen des erfindungsgemäßen Batteriespeichersystems zeichnet sich das Batteriespeichersystem durch mindestens eines der folgenden zusätzlichen Merkmale aus:
a. Jedes Batteriemodul weist ein Gehäuse auf, vorzugsweise ein quaderförmiges Gehäuse.
b. Auf mindestens zwei gegenüberliegenden Seiten des Gehäuses, insbesondere eines quaderförmigen Gehäuses, ist jeweils eine Kontaktiereinrichtung angeordnet.
c. Die Batteriemodule sind gestapelt oder gereiht.

Vorzugsweise sind die vorgenannten Merkmale a. und b. oder a. und b. und c. in Kombination verwirklicht.

Die Ausgestaltung der Batteriemodule mit einem Gehäuse und insbesondere mit einem quaderförmigen Gehäuse vereinfacht die Verbindung und insbesondere die Stapelung oder Reihung der Batteriemodule zu einem Batteriespeichersystem erheblich. Im Allgemeinen sind quaderförmige Gehäuse für derartige Batteriemodule auch bereits bei herkömmlichen Systemen bekannt, so dass die Quaderform auch für das erfindungsgemäße System genutzt werden kann. So können an sich bekannte Batteriemodule mit einem quaderförmigen Gehäuse im Bereich der mechanischen Führungen von vorhandenen Kontaktiereinrichtungen derart angepasst werden, dass Gasdurchtrittsöffnungen innerhalb der mechanischen Führungen der Kontaktiereinrichtungen bereitgestellt werden, so dass die Batteriemodule für einen Gasdurchtritt zwischen benachbarten Batteriemodulen des Systems im Sinne der Erfindung eingerichtet werden.

Besonders vorteilhaft ist es, wenn die Kontaktiereinrichtungen auf zwei sich gegenüberliegenden Seiten des quaderförmigen Gehäuses angeordnet sind. In diesem Fall können die einzelnen Batteriemodule in besonders einfacher Weise beispielsweise aufeinandergestapelt werden.

In anderen Ausführungsformen können die Kontaktiereinrichtungen auf verschiedenen Seiten des Gehäuses, jedoch nicht auf einander gegenüberliegenden Seiten des Gehäuses, vorgesehen sein, beispielsweise auf Seiten, die in einem rechten Winkel zusammenlaufen. Diese Anordnung der Kontaktiereinrichtungen ermöglicht andere Geometrien beim Verbinden der einzelnen Batteriemodule miteinander, beispielsweise in einer komplexen Blockform oder Ähnlichem.

In bevorzugten Ausgestaltungen des erfindungsgemäßen Batteriespeichersystems zeichnet sich das Batteriespeichersystem durch mindestens eines der folgenden zusätzlichen Merkmale aus:
a. Innerhalb der mechanischen Führungen der Kontaktiereinrichtungen sind jeweils zwei oder mehr Gasdurchtrittsöffnungen vorgesehen.
b. Innerhalb der mechanischen Führungen der Kontaktiereinrichtungen ist eine Gitterstruktur als Gasdurchtrittsöffnung vorgesehen.

Je nach der übrigen Ausgestaltung der Kontaktiereinrichtungen und beispielsweise abhängig von der Anzahl der einzelnen Steckelemente und deren Größe innerhalb der umlaufenden mechanischen Führung der Kontaktiereinrichtungen kann es zweckmäßig sein, beispielsweise zwei Gasdurchtrittsöffnungen pro Kontaktiereinrichtung vorzusehen, die sich diametral einander gegenüber in den Eckbereichen der Kontaktiereinrichtungen befinden. Gleichwohl ist es auch möglich, nur eine Gasdurchtrittsöffnung pro Kontaktiereinrichtung oder gegebenenfalls mehr als zwei Gasdurchtrittsöffnungen vorzusehen.

Wenn zwei Kontaktiereinrichtungen von benachbarten Batteriemodulen im System miteinander verbunden werden, kann es zweckmäßig sein, dass die jeweiligen Gasdurchtrittsöffnungen genau einander gegenüberliegen, um einen optimalen Gasfluss zu ermöglichen. Gleichfalls ist es auch möglich, dass die jeweilgen Gasdurchtrittsöffnungen nicht genau einander gegenüberliegen, da auch in diesem Fall ein ausreichend guter Gasfluss möglich sein kann.

Weiterhin kann eine Vielzahl von relativ kleinen Gasdurchtrittsöffnungen vorteilhaft sein, beispielsweise in Form eines Drahtgitters oder Ähnlichem. Insbesondere eine Gitterstruktur als Gasdurchtrittsöffnung kann besonderer Vorteile im Hinblick auf eine Flammenlöschung bei einem möglichen Brandfall bieten.

Weiterhin zeichnet sich das erfindungsgemäße Batteriespeichersystem in bevorzugten Ausführungsformen durch mindestens eines der folgenden zusätzlichen Merkmale aus:
a. Die mechanischen Führungen der Kontaktiereinrichtungen umgrenzen einen Bereich der jeweiligen Seitenfläche des Gehäuses von bis zu 70% der Gesamtfläche der Seitenfläche.
b. Die Gasdurchtrittsöffnungen einer Kontaktiereinrichtung umfassen eine Fläche von bis zu 30% der Gesamtfläche der jeweiligen Seite des Gehäuses.

Die Größe beziehungsweise die Abmessungen der mechanischen Führungen der Kontaktiereinrichtungen im Hinblick auf die Seitenfläche des Gehäuses gibt allgemein eine obere Begrenzung für die maximal möglichen Flächen der Gasdurchtrittsöffnungen vor, da sich die Gasdurchtrittsöffnungen gemäß der Erfindung innerhalb der mechanischen Führungen befinden. Die mechanischen Führungen können dabei zumindest theoretisch maximal den gesamten Querschnitt der jeweiligen Seite des Gehäuses des Batteriemoduls umfassen und bieten somit eine maximale Fläche für den Gasdurchtritt, wobei dabei auch der Flächenbedarf für die Anbringung der einzelnen Verbindungselemente der Kontaktiereinrichtung berücksichtigt werden muss.

Je nach den Erfordernissen insbesondere im Hinblick auf die Kühlung und das Strömungsverhalten bietet die Erfindung verschiedene Anpassungsmöglichkeiten für die Gasdurchtrittsöffnungen. Besonders bevorzugt ist es beispielsweise, dass die Gasdurchtrittsöffnungen einer Kontaktiereinrichtung eine Fläche von maximal 30% der Gesamtfläche der jeweiligen Seite des Modulgehäuses umfassen. Hierbei wird auf der einen Seite eine ausreichende Fläche für den Gasdurchtritt, vor allem für Kühlzwecke, bereitgestellt. Auf der anderen Seite wird eine Schwächung der Stabilität der jeweiligen Seite des Gehäuses durch die Durchbrechungen der Gehäusewandung, die für die Gasdurchtrittsöffnungen erforderlich sind, in einem vertretbaren Rahmen gehalten.

In weiteren bevorzugten Ausgestaltungen zeichnet sich das erfindungsgemäße Batteriespeichersystem durch mindestens eines der folgenden zusätzlichen Merkmale aus:
a. Das Batteriespeichersystem ist für eine Kühlung mit einem gasförmigen Medium, insbesondere mit Luft, eingerichtet.
b. Das Batteriespeichersystem ist mit Mitteln zur Luftkühlung ausgestattet.
c. Das Batteriespeichersystem weist mindestens einen, vorzugsweise mehrere Lüfter auf.
d. Das Batteriespeichersystem weist mindestens eine aktive Kühleinrichtung, beispielsweise ein Peltierelement und/oder einen Absorber-Kühler und/oder einen Kompressor-Kühler, auf.
e. Das Batteriespeichersystem weist mindestens einen Anschluss für eine externe Kühlluftquelle auf.
f. Die Batteriemodule weisen interne Strukturen zur Luftführung und/oder -leitung auf, wobei vorzugsweise die internen Strukturen zur Luftführung und/oder -leitung für eine umlaufende Luftführung eingerichtet sind.
g. Das Batteriespeichersystem ist für eine zyklische Umkehrung der Kühlungsluftrichtung eingerichtet.
h. Das Batteriespeichersystem ist mit wärmeleitenden Einrichtungen ausgestattet.
i. Das Batteriespeichersystem ist mit einem Wärmetauscher ausgestattet.
j. Das Batteriespeichersystem ist mit mindestens einem Kompressor ausgestattet.
k. Die Energiespeicherzellen sind zylindrische Rundzellen.

Es können ein oder mehrere der vorgenannten Merkmale a. bis k. in Kombination verwirklicht sein.

Besonders bevorzugt ist die Verwendung von zylindrischen Rundzellen für die Batteriemodule. Bei elektrochemischen Energiespeicherzellen und insbesondere auch bei Lithiumionen-Zellen sind verschiedene Bauformen bekannt. Neben prismatischen Formen sind Knopfzellen und zylindrische Rundzellen weit verbreitet, wobei sowohl Knopfzellen als auch Rundzellen eine kreisförmige Grundfläche aufweisen. Zylindrische Rundzellen unterscheiden sich von Knopfzellen darin, dass ihre Höhe größer als der Durchmesser der kreisförmigen Grundfläche ist. Bei der Verwendung von solchen zylindrischen Rundzellen in einem Batteriemodul können die zylindrischen Rundzellen beispielsweise in Form von Batterieblöcken angeordnet sein, in denen die Rundzellen senkrecht nebeneinander in einer Fläche angeordnet werden und beispielsweise von einem Zellhalter aus Kunststoff gehalten werden. Die Verwendung von zylindrischen Rundzellen bei derartigen Batteriemodulen hat den besonderen Vorteil, dass durch die Geometrie der Rundzellen zwischen den einzelnen Zellen zwangsläufig Hohlräume entstehen, die für eine Kühlung und insbesondere für eine Luftkühlung sehr vorteilhaft sind.

Die Maßnahmen für eine Kühlung der Energiespeicherzellen innerhalb des jeweiligen Batteriemoduls können im Prinzip mit an sich bekannten Methoden erfolgen. Besonders bevorzugt ist eine Luftkühlung der Energiespeicherzellen, wobei sich die Luft über die Gasdurchtrittsöffnungen zwischen den einzelnen Batteriemodulen verteilen kann. Zum Antrieb der Kühlluft können Lüfter (Ventilatoren) oder andere aktive Kühleinrichtungen, die dem Fachmann an sich bekannt sind, genutzt werden. Besonders bevorzugt ist es, wenn innerhalb der Batteriemodule weitere interne Strukturen, beispielsweise Lenkbleche oder Ähnliches, vorgesehen sind, die eine optimale Luftführung und/oder -leitung ermöglichen.

Alternativ zu einem Lüfter oder Ventilator kann für den Lufttransport auch ein Kompressor verwendet werden, der das System beispielsweise bei Atmosphärenüberdruck betreiben kann. In diesem Fall nimmt die Luft unter Druck mehr Wärme auf. Dabei steht das System unter Druck, so dass dem Eindringen von Feuchtigkeit und/oderStaub entgegengewirkt wird. Eine Expansion der komprimierten Luft kann dabei für weitere Abkühlung sorgen (analog einer Kältemaschine). Insgesamt bietet also ein Kompressor verschiedene Vorteile gegenüber einem Lüfter.

Das erfindungsgemäße Batteriespeichersystem kann für eine Kühlmittelführung, insbesondere Kühlluftführung, in einer Richtung, beispielsweise von oben nach unten oder von unten nach oben bei einer Stapelung der Batteriemodule, oder von rechts nach links oder von links nach rechts bei einer Reihung der Batteriemodule, vorgesehen sein. Es kann jedoch auch eine Kreisführung des Kühlmittels und insbesondere der Kühlluft vorgesehen sein, wobei abgegrenzte Kammern innerhalb der Batteriemodule eine umlaufende Luftführung erleichtern. In bevorzugten Ausgestaltungen weisen die einzelnen Batteriemodule eine oder mehrere Abtrennungen (Trennwände) auf, die die Batteriemodule in zwei oder gegebenenfalls mehr separate Kammern unterteilen. Mit dieser Ausführungsform ist mit besonderem Vorteil eine umlaufende Kühlmittelführung und insbesondere eine umlaufende Kühlluftführung möglich. Dies kann sowohl in einem offenen als auch in einem geschlossenen System vorgesehen sein.

Bei der Führung der Luft oder allgemein des Kühlmittels kann es sich um ein offenes System handeln, das beispielsweise mit einem Lüfter am Kühlmitteleingang und einem Lüftungsgitter am Kühlmittelausgang ausgestattet ist. In anderen Ausgestaltungen kann es sich um ein geschlossenes Gesamtsystem handeln, das beispielsweise mit einem Wärmetauscher arbeitet.

In einer besonders bevorzugten Ausgestaltung des erfindungsgemäßen Batteriespeichersystems ist das folgende zusätzliche Merkmal vorgesehen:
a. Das Batteriespeichersystem weist mindestens einen Feuchtigkeits- und/oder Überflutungssensor auf.

Ein Feuchtigkeits- und/oder Überflutungssensor ermöglichen es, dass das System im Fehlerfall abgeschaltet werden kann, beispielsweise wenn Wasser durch ein Lüftungsgitter in das System eindringt. Insofern ist eine Feuchtigkeits- und/oder Überflutungssensor aus sicherheitstechnischen Gründen sehr vorteilhaft.

Das erfindungsgemäße Batteriespeichersystem bietet nicht nur besondere Vorteile im Hinblick auf einen definierten Pfad für ein Kühlmittel und insbesondere für Kühlluft, sondern bietet auch besondere Vorteile im Hinblick auf einen Brandschutz. Heiße Rauchgase, die in einem Fehlerfall entstehen können, können dem Gaspfad durch die Gasdurchtrittsöffnungen folgen, wenn sie nicht anderweitig entweichen können. Gegebenenfalls entstehende Rauchgase können dabei definiert durch das System geleitet werden. Sie können sich im System verteilen und dabei abkühlen.

In besonders bevorzugten Ausgestaltungen zeichnet sich das erfindungsgemäße Batteriespeichersystem darüber hinaus durch mindestens eines der folgenden zusätzlichen Merkmale aus:
a. Das Batteriespeichersystem umfasst Mittel zur Kühlung und/oder Ableitung von Rauchgasen.
b. Das Batteriespeichersystem umfasst mindestens ein Überdruckventil.
c. Das Batteriespeichersystem umfasst mindestens ein Überdruckventil mit einem integrierten Metallgitter.
d. Das Batteriespeichersystem umfasst mindestens eine Berstmembran als Überdrucksicherung.
e. Das Batteriespeichersystem umfasst mindestens ein Kühlmaterialdepot.

Insbesondere durch ein oder mehrere der vorgenannten Merkmale a. bis f. kann vermieden werden, dass in einem Fehlerfall eine Flamme aus dem Batteriemodul beziehungsweise dem Batteriespeichersystem austreten kann. Weiterhin kann durch derartige Maßnahmen vermieden werden, dass heiße Rauchgase innerhalb des Systems weitere Energiespeicherzellen in Brand setzen können.

Es ist besonders vorteilhaft, wenn die Rauchgase nicht nur definiert geleitet, sondern auch wirkungsvoll abgekühlt werden, so dass sie beim Austritt aus dem System nicht mehr brennen.

In diesem Zusammenhang ist insbesondere ein gut wärmeleitendes Drahtgitter als abkühlende Maßnahme besonders vorteilhaft, da es eine Flamme derart abkühlen kann, dass sie am Drahtgitter quasi "stoppt". Ein Metallgitter, beispielsweise in Kombination mit einem Überdruckventil, stellt eine thermische Barriere für die Rauchgase dar, da das Metallgitter der Verbrennung lokal große Mengen an Wärme entzieht, so dass es an dieser Barriere zu einem Erliegen der Verbrennung kommt. Gleichzeitig kann die Barriere, also das Metallgitter, nahezu ungehindert gasdurchlässig sein. Es muss nur sichergestellt sein, dass genügend Kontaktfläche und Wärmeableitung und/oder Wärmekapazität vorhanden sind, um den Verbrennungsprozess an dieser Stelle zu stoppen. Bei dem erfindungsgemäßen Batteriespeichersystem ist es daher in bevorzugten Ausgestaltungen vorgesehen, derartige thermische Barrieren in den Pfad der gegebenenfalls auftretenden heißen Brandgase zu legen, so dass im Fehlerfall keine Flammen austreten können und so auf einfache und kostengünstige Weise die Sicherheit des jeweiligen Batteriemoduls beziehungsweise des Batteriesystems erhöht wird.

Wenn die Gasdurchtrittsöffnungen selbst als Gitterstruktur ausgebildet sind, kann bereits hierdurch eine Abkühlung der durchtretenden Gase, insbesondere im Fall von entweichenden Rauchgasen, auftreten, was einen besonderen Vorteil im Hinblick auf die Sicherheit des Batteriespeichersystems bietet.

Ein Kühlmaterialdepot ist bevorzugt in einem Hohlraum angeordnet, durch welchen eventuell auftretende Brandgase hindurchströmen müssen. Bei dem Kühlmaterial handelt es sich um ein Material, das geeignet ist, diese Gase abzukühlen und ggf. kondensieren zu lassen. In Frage kommen hier beispielsweise Metallwolle oder auch ein Schüttgut wie z.B. Sand oder Quarzschaumgranulat. Das Kühlmaterialdepot umfasst dieses Material bevorzugt in einem gasdurchlässigen Säckchen (z.B. aus Nomex- oder Mineralfasergewebe wie Glas). Dieses Säckchen kann beispielsweise in einer Gasdurchtrittsöffnung befestigt werden, sei es mittels Klammer, Bügel, Kabelbinder oder Kleber. Somit kann sich ein Kühlmitteldepot in einer dedizierten Kammer befinden, muss es aber nicht unbedingt.

Insbesondere durch das Zusammenspiel eines Kühlmaterialdepots mit Überdruckventilen mit integriertem Metallgitter können im Vergleich mit herkömmlichen Batteriesystemen erheblich größere Rauchgasmengen gekühlt und gewissermaßen abgefangen werden, ohne dass es zu weitergehenden Schäden am oder durch das erfindungsgemäße Batteriespeichersystem kommt.

Die Kühlmaterialdepots können beispielsweise mit besonderem Vorteil im Bereich der Gasdurchtrittsöffnungen angeordnet werden, wo sie in besonders effektiver Weise einen Schutz vor den Auswirkungen des Ausgasens einer oder mehrerer der Energiespeicherzellen bieten. Dabei ist es auch möglich, durchtretende Rauchgase durch eine Vielzahl kleiner Lüftungsöffnungen, beispielsweise in Form einer Gitterstruktur, die die Gasdurchtrittsöffnungen bildet, bereits so abzukühlen, dass ein löschender Effekt für gegebenenfalls auftretende Flammen eintritt. In diesem Zusammenhang eignen sich beispielsweise auch Schlitzstrukturen für die Gasdurchtrittsöffnungen. Besonders geeignet in diesem Zusammenhang ist eine Kombination von Kühlmaterialdepots und Lüftungsgittern beziehungsweise einer Matrix aus vielen kleinen Lüftungsöffnungen, die die Gasdurchtrittsöffnungen zwischen den Batteriemodulen bildet.

In einem herkömmlichen hermetisch dichten Batteriemodul, das über keine Vorrichtungen zum Gasaustausch verfügt, kann bereits eine einzige Energiespeicherzelle beim "Abblasen" so viel Druck im Gehäuse aufbauen, dass unter Umständen die Dichtigkeit des Batteriemoduls nicht mehr gegeben ist. In der Folge können Rauchgase austreten und im Extremfall kann das Batteriemodul sogar bersten. Durch die erfindungsgemäß vorgesehenen Maßnahmen steht durch die Möglichkeit des Gasaustausches zwischen benachbarten Batteriemodulen ein Vielfaches an Raum für die Expansion von Rauchgasen zur Verfügung, so dass der gegebenenfalls auftretende Druckaufbau bei dem erfindungsgemäßen System deutlich vermindert wird. Das erfindungsgemäße System stellt daher ein erheblich höheres Maß an Sicherheit im Hinblick auf die Wahrscheinlichkeit des Berstens eines Batteriemoduls und/oder im Hinblick auf den Austritt von Rauchgasen dar.

Zusätzlich kann es vorgesehen sein, dass die Propagation von Überhitzungen unter den Energiespeicherzellen durch geeignete, konstruktive Maßnahmen verhindert wird, so dass innerhalb des jeweiligen Batteriemoduls nur sehr wenige Zellen thermisch auffällig werden können. Die Propagation kann beispielsweise durch eine geeignete Anordnung von Kühlmaterialdepots und/oder Berstmembranen oder Vergleichbarem verhindert werden.

Die Gasdurchtrittsöffnungen des erfindungsgemäßen Batteriespeichersystems können auch unabhängig von einer Kühlmittelführung im Prinzip ausschließlich für die Bereitstellung eines Pfades für Brandgase beziehungsweise Rauchgase dienen. Bei einem solchen System kann beispielsweise auf einen Lüfter oder andere Antriebe für die Kühlluft oder ein anderes Kühlmittel verzichtet werden. Allein durch die Gasdurchtrittsöffnungen, die einen Gasaustausch zwischen den benachbarten Batteriemodulen ermöglichen, wird ein ausreichender Temperaturausgleich bewerkstelligt, der insbesondere auch im Fehlerfall bei eventuell auftretenden Brandgasen einen Raum zur Expansion bietet und so vermeidet, dass heiße Brandgase nach außen abgegeben werden.

Im Hinblick auf ein gegebenenfalls vorgesehenes Kühlmaterialdepot des erfindungsgemäßen Batteriespeichersystems ist vorzugsweise mindestens eines der folgenden zusätzlichen Merkmale vorgesehen:
a. Das Kühlmaterial des Kühlmaterialdepots wird von Stahlwolle, insbesondere grober Stahlwolle, und/oder Aluminiumwolle, insbesondere grober Aluminiumwolle, und/oder Quarzschaumgranulat und/oder einem Aluminiumkühlkörper und/oder einem offenporigen Metallschaum und/oder Steinwolle gebildet.
b. Das Kühlmaterialdepot wirkt als Staubfilter.

Grobe Stahlwolle als Kühlmittel ist besonders geeignet, da durch die grobe Struktur eine Entzündung der Wolle vermieden wird. Auch grobe Aluminiumwolle ist sehr geeignet und weist sogar eine bessere Wärmeleitfähigkeit als Stahl auf. Quarzschaumgranulat (*Pyrobubbles*) ist ein weiteres geeignetes Material für die Kühlmaterialdepots. Weiterhin eignen sich ineinander verschränkte Aluminiumkühlkörperund/oderoffenporige Metallschäume. Steinwolle ist in diesem Zusammenhang ebenfalls geeignet und sollte zweckmäßigerweise locker gepackt sein, um nur einen geringen Strömungswiderstand auszubilden.

Durch geeignete Materialauswahl und Dimensionierung von derartigen Kühlmaterialdepots kann das Kühlmaterialdepot auch als Staubfilter wirken, der aus umwelttechnischen Gründen erforderlich sein kann und der zugleich als Rauchgaskühlerwirksam ist. Ein solches Kühlmaterialdepot kann damit zwei Aufgaben gleichzeitig erfüllen.

Die Rauchgase, die bei einer Ausgasung von Energiespeicherzellen entstehen, bestehen in der Regel hauptsächlich aus hochsiedendem Elektrolyten. Durch eine ausreichende Größe des vorteilhafterweise vorgesehenen Kühlmaterialdepots können die Rauchgase derart wirkungsvoll abgekühlt werden, dass zumindest ein Teil des Elektrolytdampfes darin wieder kondensiert. Dies führt im Umfeld des betroffenen Batteriespeichersystems zu einer erheblich reduzieren Rauchbelastung im Falle eines solchen Fehlers. Zusätzlich werden weniger brennbare Gase emittiert, was ebenfalls die Brandgefahr für die Umgebung weiter absenkt. Um diesen Effekt weiter zu optimieren, kann vorzugsweise ein stark wärmeleitendes Material wie zum Beispiel Aluminiumwolle mit absorbierendem, feuerfesten Quarzschaumgranulat als Material für die Kühlmitteldepots kombiniert werden.

In besonders vorteilhaften Ausführungsformen zeichnet sich das erfindungsgemäße Batteriespeichersystem durch das folgende zusätzliche Merkmal aus:
a. Das Batteriespeichersystem ist mit mindestens einem Zugang für ein Löschmittel ausgestattet.

Der mindestens eine Zugang für das Löschmittel kann am Gesamtsystem und/oder an einem oder mehreren der Batteriemodule vorgesehen sein. Dieser Zugang kann im Brandfall der Brandbekämpfung insbesondere durch die Feuerwehr dienen. Geeignete Löschmittel für eine derartige Brandbekämpfungsind dem Fachmann bekannt.

In einer weiteren, besonders bevorzugten Ausgestaltung zeichnet sich das erfindungsgemäße Batteriespeichersystem durch mindestens eines der folgenden zusätzlichen Merkmale aus:
a. Das Batteriespeichersystem umfasst mindestens ein Auffangmittel für entweichende Rauchgase.
b. Das Auffangmittel ist ein entfaltbarer Beutel.
c. Der Beutel besteht aus hitzebeständigem Material.

Die vorgenannten Merkmale a. und b. sind vorzugsweise in Kombination miteinander verwirklicht. Besonders bevorzugt ist eine Kombination der Merkmale a. bis c..

Ein solches Auffangmittel kann vor allem in einem geschlossenen System dazu dienen, eine Volumenforderung aufzunehmen, die insbesondere bei einer Rauchgasentwicklung entsteht. Der entfaltbare Beutel kann in zusammengefalteter Form im System liegen und sich erst dann entfalten, wenn ein entsprechend hoher Druck zum Beispiel durch das Abblasen von Energiespeicherzellen auftritt. Durch diese Maßnahme wird plötzlich auftretendem, volumenforderndem Rauchgas ein Raum zu dessen Entspannung geboten, sodass die gesundheitsschädlichen Gase nicht in die Umgebung abgegeben werden.

In besonders vorteilhafter Weise besteht der Beutel aus hitzebeständigem Material, um durch die heißen Rauchgase nicht beschädigt zu werden und nicht selbst Feuer zu fangen. Als Material für den hitzebeständigen Beutel eignet sich beispielsweise Nomex^{®} als ein von Dupont entwickeltes hitzebeständiges Material, das herkömmlicherweise auch für Schutzkleidung verwendet wird. Weiterhin kann beispielsweise Polytetrafluorethylen als Material für den Beutel eingesetzt werden. Auch ein Mineralfasergewebe wie Glasfaser mit und ohne Beschichtung wie z.B. Silikon oder Teflon kommt in Frage. Das Material kann gasdicht sein oder auch eine geringe Durchlässigkeit aufweisen um Überdruck notfalls abblasen zu können. Möglich wären auch Ballons aus Teflonfolie oder Kapton. Für den Fall, dass mit weniger heißen Gasen zu rechnen wäre, bzw. diese schon zuvor durch ein o.g. Depot abgekühlt wären, käme auch Polyester (PET), gegebenenfalls metallisch beschichtet, in Frage.

Gegebenenfalls alternativ oder zusätzlich kann eine Kühlung der Rauchgase vor dem Übertritt in das Auffangmittel beziehungsweise in den Beutel vorgesehen sein. Hierfür eignen sich insbesondere die vorgenannten Maßnahmen wie beispielsweise ein Kühlmaterialdepot und/oder ein integriertes Metallgitter.

Weiterhin kann ein Überdruckventil vor (im Rauchgaspfad) oder hinter (Gehäusedurchführung) dem Auffangmittel angeordnet sein. Auch das Auffangmittel selbst, insbesondere der zusammengefaltete Beutel, kann bereits durch seine Faltung und Reibung des Materials schon eine gewisse Dichtung mit Überdrucksicherung darstellen.

In besonders bevorzugten Ausgestaltungen kann das Auffangmittel derart an dem Gehäuse eines Batteriemoduls oder beispielsweise an einem Deckelteil oder Bodenteil des Batteriespeichersystemsangeordnetsein, das das Auffangmittel im Fall einer Füllung mit Rauchgasen aus dem Gehäuse gedrückt und nach außen durch die Rauchgase aufgeblasen wird. Bei der Installation des Batteriespeichersystems sollte bei einer solchen Ausgestaltung darauf geachtet werden, dass der Durchtritt des Auffangmittels durch das Gehäuse nach außen nicht blockiert wird.

Insgesamt bietet das erfindungsgemäße Batteriespeichersystem die Möglichkeit einer Luftkühlung beziehungsweise einer Frischluftkühlung bei Systemen, die einer hohen IP-Schutzklasse genügen müssen. Die Luftkühlung ist dabei wesentlich günstiger als eine technisch aufwändig Flüssigkeitskühlung. Insbesondere ist nicht zwingend ein Wärmetauscher erforderlich. Zudem erlaubt das erfindungsgemäße Batteriespeichersystem erhebliche Vorteile im Hinblick auf eine Brandschutzsicherung, indem eine Rauchgasführung beziehungsweise ein Rauchgasmanagement in besonders vorteilhafter Weise in das System in der beschriebenen Weise integriert werden kann. Ein weiterer besonderer Vorteil des erfindungsgemäßen Batteriespeichersystems ist, dass eine kostengünstige Kühlung, insbesondere die besonders günstige Luftkühlung, sowohl im offenen wie auch im geschlossenen System möglich ist. Beide Systemkonfigurationen lassen sich im Prinzip mit dem gleichen Batteriemodul realisieren. Dabei ist eine Kühlluftführung auch in hermetisch geschlossenen Systemen möglich, wobei gleichzeitig eine Verbesserung des Feuerschutzes beziehungsweise des Brandschutzes erreicht wird. Schließlich erlaubt das erfindungsgemäße Batteriespeichersystem eine besonders einfache Montage der einzelnen Batteriemodule. Da die Gasdurchtrittsöffnungen einen unmittelbaren Gasaustausch zwischen den einzelnen Batteriemodulen ermöglichen, ist kein zusätzlicher Montage- und Materialaufwand zur Führung der Kühlluft erforderlich.

Weiterhin umfasst die Erfindung ein Batteriemodul, das insbesondere zum Aufbau des beschriebenen, erfindungsgemäßen Batteriespeichersystems geeignet ist. Das Batteriemodul umfasst mindestens eine KontaktiereinrichtungzurVerbindung mit einem anderen Batteriemodul des Batteriespeichersystems und/oder gegebenenfalls mit einem Bodenteil und/oder einem Deckelteil des Batteriespeichersystems. Die mindestens eine Kontaktiereinrichtung umfasst mindestens einen, vorzugsweise mehrere Anschlüsse für Leistung und/oder Datensignale. Das erfindungsgemäße Batteriemodul ist vor allem dadurch gekennzeichnet, dass die mindestens eine Kontaktiereinrichtung von einer umlaufenden mechanischen Führung umgeben ist und dass im Bereich der Kontaktiereinrichtung innerhalb der umlaufenden mechanischen Führung mindestens eine Gasdurchtrittsöffnung vorgesehen ist. Bezüglich weiterer Vorteile und bezüglich weiterer bevorzugter Merkmale des erfindungsgemäßen Batteriemoduls wird auch auf die obige Beschreibung verwiesen.

In besonders bevorzugter Weise ist das erfindungsgemäße Batteriemodul durch mindestens eines der folgenden zusätzlichen Merkmale gekennzeichnet:
a. Das Batteriemodul umfasst Mittel zur Kühlung und/oder Ableitung von Rauchgasen.
b. Das Batteriemodul umfasst mindestens ein Überdruckventil.
c. Das Batteriemodul umfasst mindestens ein Überdruckventil mit einem integrierten Metallgitter.
d. Das Batteriemodul umfasst mindestens eine Berstmembran als Überdrucksicherung.
e. Das Batteriemodul umfasst mindestens ein Kühlmaterialdepot.
f. Das Batteriemodul ist mit mindestens einem Zugang für ein Löschmittel ausgestattet.
g. Das Batteriemodul umfasst mindestens ein Auffangmittel für entweichende Rauchgase.

Auch bezüglich dieser vorgenannten Merkmale a. bis h. des erfindungsgemäßen Batteriemoduls wird auf die obige Beschreibung verwiesen, in der verschiedene Vorteile und weitere Merkmale dieser Aspekte der Erfindung bereits beschrieben sind.

Neben dem beschriebenen Energiespeichersystem und dem beschriebenen Batteriemodul, die vor allem durch die erfindungsgemäßen Gasdurchtrittsöffnungen gekennzeichnet sind, umfasst die Erfindung weiterhin ein Batteriespeichersystem oder ein Batteriemodul, insbesondere ein hermetisch dichtes *Standalone*-Batteriemodul, das nicht über die beschriebenen Gasdurchtrittsöffnungen verfügt, das aber ein Kühlmaterialdepot, insbesondere in Kombination mit einer Rauchgaskühlung in der oben beschriebenen Weise, aufweist. Das Batteriespeichersystem oder das Batteriemodul umfasst eine Mehrzahl von elektrochemischen Energiespeicherzellen und ist durch mindestens ein Kühlmaterialdepot gekennzeichnet. Dieses Kühlmaterialdepot dient zur Abkühlung von möglicherweise auftretenden Rauchgasen in dem Batteriespeichersystem oder dem Batteriemodul in der oben beschriebenen Weise.

Das Kühlmaterial des Kühlmaterialdepots kann insbesondere von Stahlwolle, insbesondere von grober Stahlwolle, und/oder von Aluminiumwolle, insbesondere von grober Aluminiumwolle, und/oder von Quarzschaumgranulat und/oder einem Aluminiumkühlkörper und/oder einem offenporigen Metallschaum und/oder Steinwolle gebildet werden. Bezüglich weiterer Merkmale des Kühlmaterials wird auch auf die obige Beschreibung verwiesen. In besonders bevorzugter Weise kann das Kühlmaterialdepot zugleich als Staubfilter wirken.

Im Prinzip kann das Kühlmaterialdepot oder die mehreren Kühlmaterialdepots an verschiedenen Stellen in dem Batteriespeichersystem oder dem Batteriemodul angeordnet sein. In besonders bevorzugter Weise ist das Kühlmaterialdepot im Bereich eines Überdruckventils, beispielsweise im Bereich einer Berstmembran, an einem äußeren Gehäuse des Systems oder des Batteriemoduls angeordnet. In dieser Ausgestaltung können die sich möglicherweise entwickelnden Rauchgase zunächst im Bereich des Kühlmaterialdepots abkühlen, bevor sie über das Überdruckventil beziehungsweise die Berstmembran nach außen entlassen werden.

Schließlich umfasstdie Erfindung ein Batteriespeichersystem oder ein Batteriemodul mit einem Auffangmittel für gegebenenfalls entweichende Rauchgase, unabhängig von den oben beschriebenen Gasdurchtrittsöffnungen bei den Batteriemodulen, aus denen das Batteriespeichersystem aufgebaut ist. Bei dem Auffangmittel kann es sich um einen entfaltbaren Beutel handeln und in besonders bevorzugter Weise um einen Beutel, vorzugsweise einen entfaltbaren Beutel, aus hitzebeständigem Material.

Es können ein oder mehrere Auffangmittel an dem Batteriemodul oder dem Batteriespeichersystem vorgesehen sein. Das Batteriemodul kann Bestandteil eines Batteriespeichersystems sein, das mehrere solcher Batteriemodule mit oder ohne Auffangmittel umfasst. Bezüglich weiterer Merkmale und Vorteile des Auffangmittels auf die obige Beschreibung verwiesen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Fig.1: prinzipieller Aufbau eines Batteriespeichersystems mit Bodenteil und Deckelteil;
- Fig. 2: Vorderseite (Teilfigur A) eines Batteriemoduls und Rückseite (Teilfigur B) eines Batteriemoduls, jeweils mit einer erfindungsgemäßen Kontaktiereinrichtung;
- Fig. 3: Batteriespeichersystem mit einer senkrechten Luftführung in einem offenen System;
- Fig. 4: separates Batteriemodul mit geschlossenen Kammern zur Realisierung einer umlaufenden Luftführung;
- Fig. 5: Batteriespeichersystem mit einer umlaufenden Luftführung in einem offenen System;
- Fig. 6: Batteriespeichersystem mit einer Hin- und Rückführung des Kühlmittels in einem geschlossenen System;
- Fig. 7: Batteriespeichersystem mit einer umlaufenden Luftführung in einem geschlossenen System und Rauchgasmanagement;
- Fig. 8: separates Batteriemodul mit integrierten Kühlmaterialdepots;
- Fig. 9: *Standalone*-Batteriemodul mit Kühlmaterialdepot; und
- Fig.10: Batteriespeichersystem mit Auffangmittel zum Auffangen von Rauchgasen (Normalbetrieb - Teilfigur A, Fehlerfall - Teilfigur B).

### DETAILLIERTE BESCHREIBUNG DER AUSFÜHRUNGSBEISPIELE

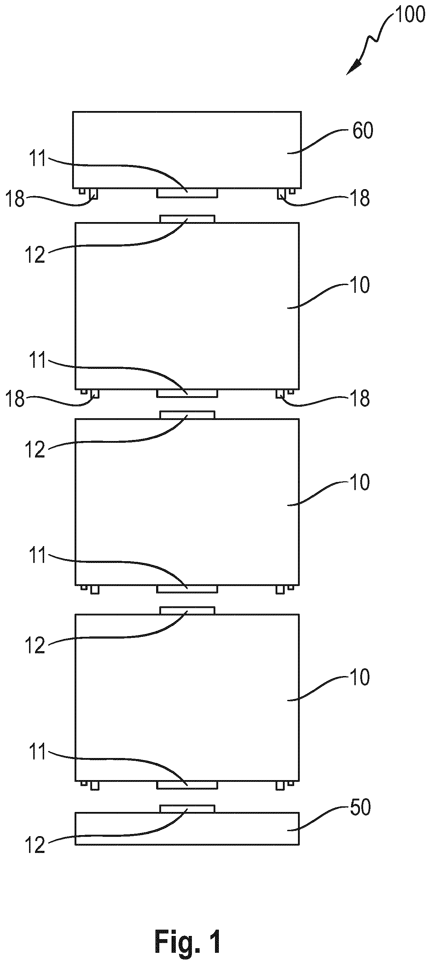

**Fig. 1** zeigt den prinzipiellen Aufbau eines Batteriespeichersystems 100, das von drei gestapelten Batteriemodulen 10 und einem Bodenteil 50 und einem Deckelteil 60 gebildet ist. In dieser Darstellung sind die Batteriemodule 10 im noch nicht zusammengefügten Zustand abgebildet. Alternativ zu der hier angedeuteten Stapelung der Batteriemodule 10 ist beispielsweise auch eine Nebeneinanderreihung der Batteriemodule möglich.

Die hier beispielhaft gezeigten drei Batteriemodule 10 sind auf ihren jeweils einander gegenüberliegenden Seiten ihrer quaderförmigen Gehäuse jeweils mit einer Kontaktiereinrichtung 11 beziehungsweise 12 ausgestattet. Auch das Bodenteil 50 weist eine Kontaktiereinrichtung 12 und das Deckelteil 60 eine Kontaktiereinrichtung 11 auf. Die Kontaktiereinrichtungen 11, 12 sind als Steckverbinder ausgebildet.

Die Kontaktiereinrichtungen 11, 12 sindjeweils von einer umlaufenden mechanischen Führung umgeben, die die im Inneren der Kontaktiereinrichtungen vorgesehenen, hier nicht näher dargestellten Kontakte beziehungsweise Steckelemente schützt. Darüber hinaus sind die Kontaktiereinrichtungen 11 und 12 jeweils so ausgestaltet, dass sie ineinandergesteckt werden können. In diesem Ausführungsbeispiel sind zu diesem Zweck die Kontaktiereinrichtungen 12 beziehungsweise deren umlaufende mechanische Führungen etwas kleiner ausgebildet als bei den Kontaktiereinrichtungen 11.

Die Anschlüsse für diesen Batteriemodulstapel werden üblicherweise am oberen Deckelteil 60 zugänglich gemacht, während das Bodenteil50 nur Verbindungstechnik enthält. Prinzipiell ist die Wahl der Stelle der Anschlüsse für Leistung und Datensignale jedoch frei wählbar und ist beispielsweise auch im Bodenteil 50 möglich.

Auf der unteren Seite der Batteriemodule 10 und des Deckelteils 60 sind jeweils Abstandshalter und/oder mechanische Verbindungselemente 18 vorgesehen, die eine Stapelung und Montage der Batteriemodule 10 erleichtern.

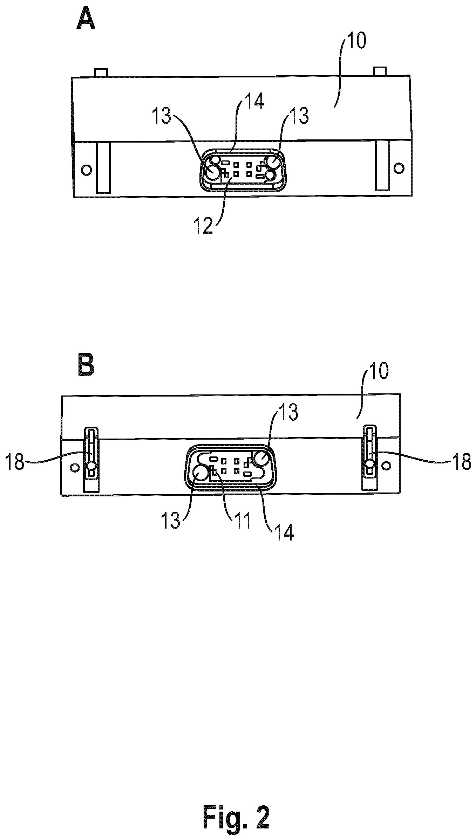

**Fig.** 2 zeigt weitere Details der Kontaktiereinrichtungen 11, 12 der Batteriemodule 10. Die Kontaktiereinrichtungen 11, 12 sind jeweils gemäß der Erfindung mit Luftdurchtrittsöffnungen 13 ausgestattet. Die Luftdurchtrittsöffnungen 13 werden dabei von Durchbrechungen in der Gehäusewandung des jeweiligen Batteriemoduls 10 gebildet. Die Gasdurchtrittsöffnungen 13 befinden sich innerhalb der umlaufenden mechanischen Führung 14 der jeweiligen Kontaktiereinrichtung 11, 12. Im Übrigen befinden sich innerhalb der umlaufenden mechanischen Führung 14 jeweils die an sich bekannten Anschlüsse (Steckelemente) für Leistung und/oder Datensignale, über die die einzelnen Batteriemodule 10 miteinander verschaltet werden. Teilfigur A zeigt die Vorderseite oder Oberseite eines Batteriemoduls 10 und Teilfigur B zeigt die Rückseite oder Unterseite eines Batteriemoduls 10.

Die Kontaktiereinrichtungen 12 und 11 sind so gestaltet, dass sie als zueinander komplementäre Steckverbinder ausgebildet sind. Beispielsweise istdie Kontaktiereinrichtung 12 auf derVorderseite oder Oberseite weiblich und die Kontaktiereinrichtung 11 auf der Rückseite oder Unterseite des Batteriemoduls männlich oder entsprechend andersherum ausgebildet.

Die umlaufende mechanische Führung 14 ist stabil ausgebildet und dient in erster Linie dem Schutz vor mechanischen Beschädigungen an den Kontaktiereinrichtungen beziehungsweise den Steckelementen selbst. Die Führungen 14 sind so dimensioniert, dass sie ineinandergeschoben werden können, wenn die passenden Kontaktiereinrichtungen 12 und 11 miteinander verbunden werden. Neben dem mechanischen Schutz erfüllen die Führungen 14 damit auch eine Gewährleistung dafür, dass ein falsches Stecken vermieden wird. Vorzugsweise sind die mechanischen Führungen 14 mit einer Dichtung, zum Beispiel einer Gummi-Dichtlippe oder Ähnlichem, versehen, um die Dichtigkeit gegenüber Gas, Feuchtigkeit, Staub usw. zu gewährleisten.

Die Gasdurchtrittsöffnungen 13 sind in diesem Ausführungsbeispiel kreisrund ausgebildet und befinden sich an zwei einander gegenüberliegenen Ecken der jeweiligen Kontaktiereinrichtung 11,12. Beim Zusammenfügen der Kontaktiereinrichtungen 11 und 12 liegen die Gasdurchtrittsöffnungen 13 der beiden Kontaktiereinrichtungen 11 und 12 nicht unmittelbar übereinander, dennoch kann hierdurch ein ausreichender Gasfluss sichergestellt werden. In anderen Ausführungsformen kann es vorgesehen sein, dass die Gasdurchtrittsöffnungen nach der Zusammenfügung der Kontaktiereinrichtungen unmittelbar einander gegenüber liegen, wobei der Strömungswiderstand gegebenenfalls reduziert werden kann.

Über die Gasdurchtrittsöffnungen 13 wird eindirekter Gasaustausch und insbesondere eine Führung von Kühlluft zwischen den einzelnen Batteriemodulen 10 möglich, ohne dass weitere Maßnahmen zur Führung der Kühlluft zwischen den Batteriemodulen, beispielsweise Schläuche oder Ähnliches, erforderlich wären. Darüber hinaus können die Gasdurchtrittsöffnungen 13 für ein Rauchgasmanagement genutzt werden.

Um den Strömungswiderstand für das durchgeleitete Kühlmedium, beispielsweise die Kühlluft, zu verringern, können in anderen Ausführungsbeispielen die umlaufenden mechanischen Führungen 14 und die hiervon umschlossenen Gasdurchtrittsöffnungen 13 gegenüber diesem Ausführungsbeispiel erweitert und vergrößert werden. Die mechanischen Führungen 14 können dabei maximal den gesamten Querschnitt der jeweiligen Seite des Batteriemoduls 10 umfassen, so dass für den Kühlmitteldurchtritt ausreichend viel Fläche beziehungsweise Querschnitt dargestellt werden kann. Es kann auch eine Vielzahl von Öffnungen, gegebenenfalls in verschiedenen Formen, vorgesehen sein, je nach Strömungs- und gegebenenfalls Kühl- und Brandschutzverhalten.

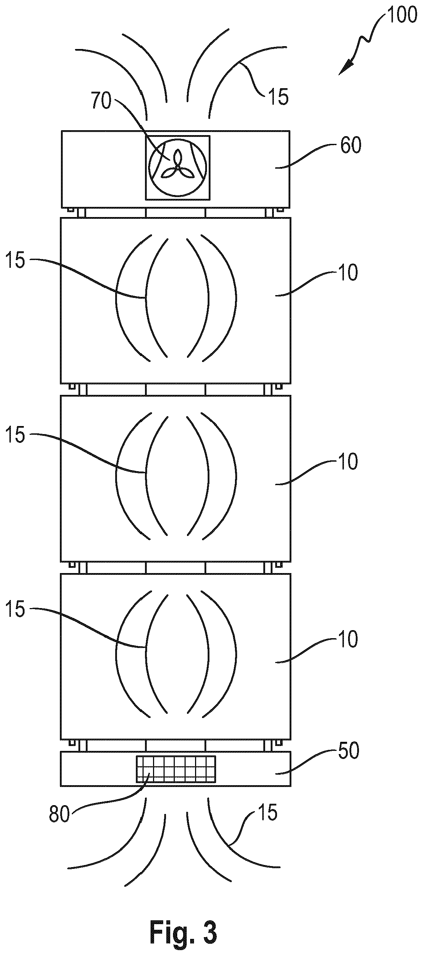

**Fig. 3** illustriert ein Beispiel eines erfindungsgemäßen Batteriespeichersystems, bei dem eine senkrechte Kühlluftführung mit einer Luftströmung entweder nach oben oder nach unten durch den Stapel der Batteriemodule 10 realisiert ist. Mit dem Bezugszeichen 15 sind die Luftströmungen bezeichnet. In diesem Ausführungsbeispiel ist im Deckelteil 60 ein Ventilator 70 und im Bodenteil 50 ein Lüftungsgitter 80 vorgesehen. Die Luftströmungsrichtung kann während des Betriebs zeitweise umgekehrt werden, um im zeitlichen Mittel die thermische Belastung der Energiespeicherzellen innerhalb der Batteriemodule 10 zu egalisieren.

In anderen Ausführungsbeispielen kann/können der oder die Lüfter oderVentilatoren auch im unteren Bereich des Systems, insbesondere im Bodenteil, oder innerhalb des Stapels in einem oder mehreren Batteriemodulen oder auch außerhalb des Systems vorgesehen sein. Darüber hinaus sind Anschlüsse für eine externe Kühlluftquelle, wie beispielsweise Frischluftzufuhr aus der Umwelt, oder ein Anschluss an eine Klimaanlage beziehungsweise Kältemaschine möglich.

Alternativ oder zusätzlich zu einem Lüfter kann/können zusätzlich aktive Kühleinrichtungen vorgesehen sein, wie beispielsweise Peltier-, Absorber- oder Kompressorkühler. Darüber hinaus können innerhalb jedes Batteriemoduls interne Strukturen zur Luftführung beziehungsweise zur Luftleitung oder allgemein zur Kühlmittelführung oder -leitung vorgesehen sein.

Durch den Einsatz eines Feuchtigkeits- und/oder Überflutungssensors kann das System im Fehlerfall abgeschaltet werden, beispielsweise wenn Wasser durch das untere Lüftungsgitter 80 eindringt.

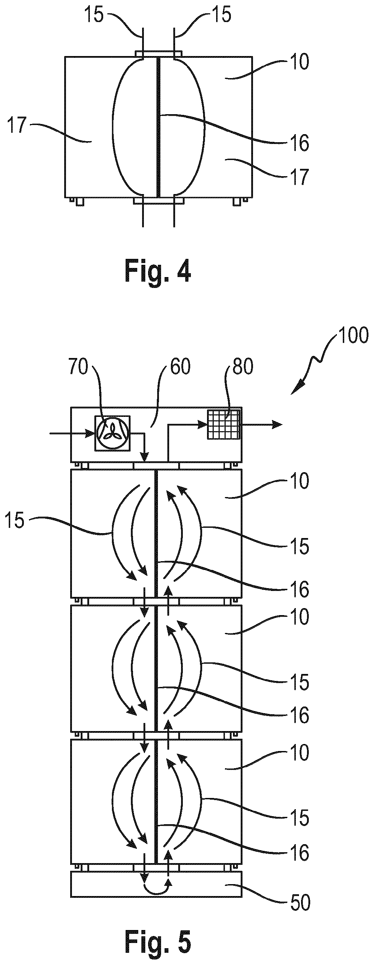

**Fig. 4** illustriert ein einzelnes Batteriemodul 10, das durch eine Unterteilung 16 im Inneren des Batteriemoduls gekennzeichnet ist, so dass in diesem Ausführungsbeispiel zwei Abteilungen beziehungsweise separate Kammern 17 innerhalb des Batteriemoduls gebildet werden. Die Kammern 17 erlauben eine umlaufende Luftführung, wie sie anhand des Batteriespeichersystems 100 in **Fig. 5** illustriert ist. Hierbei bezeichnen die Bezugszeichen 15 wiederum die Luftströmungsrichtung. Der Lufteinlass und der Luftauslass sind in diesem Ausführungsbeispiel in dem Deckelteil 60 des Batteriespeichersystems vorgesehen, können aber auch anderer Stelle, beispielsweise im Bodenteil 50, oder an anderer Stelle innerhalb des Stapels der Batteriemodule 10 realisiert werden. Der Luftstrom wird durch einen Lüfter oder Ventilator 70 im Deckelteil 60 angetrieben und über ein Lüftungsgitter 80, ebenfalls im Deckelteil 60, nach dem Durchlaufen der Batteriemodule 10 und des Bodenteils 50 aus dem Batteriespeichersystem ausgeleitet.

Um einen hohen Temperaturgradienten entlang des Luftpfades zu vermeiden, kann die Luftgeschwindigkeit entsprechend hoch gewählt werden. Zusätzlich oder stattdessen kann auch eine zyklische Umkehrung der Strömungsrichtung erfolgen, um die thermische Belastung der Batterien zu egalisieren.

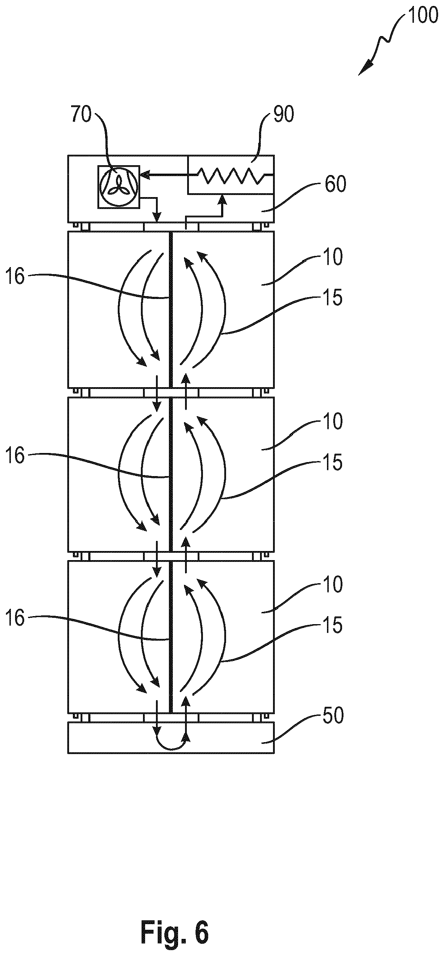

**Fig. 6** illustriert ein weiteres erfindungsgemäßes Batteriespeichersystem 100 mit mehreren gestapelten Batteriemodulen 10 sowie einem Bodenteil 50 und einem Deckelteil 60. Vergleichbar mit der Ausgestaltung des Batteriesystems in Fig. 5 sind auch hier Unterteilungen 16 zur Unterteilung der Batteriemodule 10 in separate Kammern vorgesehen. Dies ermöglicht eine umlaufende Luftführung in diesem geschlossenen System, wobei durch eine Hin- und Rückführungdes Kühlmittels innerhalb der Batteriemodule eine besonders gute Kühlung möglich ist. Durch die erfindungsgemäß vorgesehenen Gasdurchtrittsöffnungen, die einen Luftaustausch beziehungsweise Kühlmittelaustausch zwischen den einzelnen Batteriemodulen 10 und dem Deckelteil 60 und dem Bodenteil 50 ermöglichen, sind keine weiteren Kanäle, Rohre oder Schläuche für das Schließen des Kühlmittelkreislaufs erforderlich. Auch hier kann die Lüftungsrichtung zyklisch gewechselt werden, um die Temperaturverteilungzu egalisieren.

Weiterhin kann in dieser Ausgestaltung und auch in den anderen erläuterten Ausgestaltungen jedes Batteriemodul 10 eine oder mehrere wärmeleitenden Maßnahmen/Komponenten beinhalten, die die separaten Kammern thermisch koppeln, beispielsweise eine wärmeleitende Grundplatte oder ein entsprechend als Wärmeüberträger wirkende Gehäusewand.

In dieser Ausgestaltung ist neben dem Lüfter oder Ventilator 70 ein dedizierter Wärmetauscher 90 im Deckelteil 60 vorgesehen, der zur Entwärmung der umgewälzten Kühlluft dient. Prinzipiell kann das System jedoch auch ohne einen solchen Wärmetauscher arbeiten. Sofern die Oberfläche des Batteriespeichersystems 100 als Kühlkörper dienen soll, kann dieses geschlossene System Hotspots kühlen und Wärme abgeben helfen. Die äußere Oberfläche des Systems dient in diesem Fall als Kühlkörper, der die Wärme der innen umgewälzten Luft passiv an die Umgebung abgeben kann. Bei aktiver Umwälzung der Luft im Inneren des Systems sorgt die ständige Luftbewegung dafür, dass Stellen mit besonders hoher Wärmeleistung pro Fläche (hot spots) entwärmt werden und die Temperaturen bis zu einem gewissen Maß egalisiert werden.

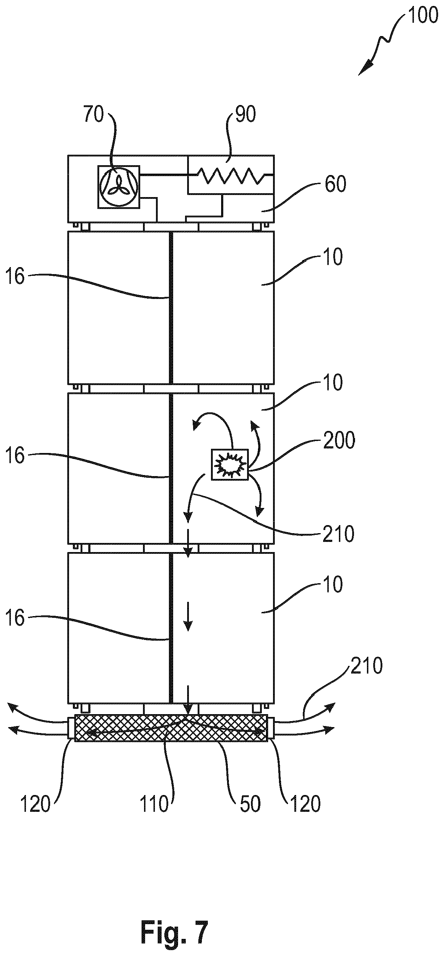

**Fig. 7** zeigt ein Batteriespeichersystem 100, wobei in diesem Ausführungsbeispiel im Unterschied zu dem in Fig. 6 gezeigten System im Bodenteil 50 ein Kühlmaterialdepot 110 vorgesehen ist. Darüber hinaus sind im Bereich des Bodenteils 50 zwei Überdruckventile oder Berstmembranen 120 vorgesehen. Wenn in diesem Ausführungsbeispiel die Energiespeicherzelle 200, die sich im mittleren Batteriemodul 10 befindet, thermisch auffällig werden und ausgasen und gegebenenfalls sogar in Brand geraten würde, so würden die entstehenden Rauchgase 210 dem Pfad folgen, der den geringsten Widerstand bietet. Der Verlauf der Rauchgase 210 ist hier durch Pfeile angedeutet. Dabei können die volumenfordernden Rauchgase 210 sich auf mehrere Batteriemodule 10 verteilen, wodurch einem gefährlichen Druckanstieg entgegengewirkt wird. Für den Fall, dass der Druckanstieg trotz des erhöhten Volumens nicht mehr abgefangen werden kann, sorgt das Kühlmaterialdepot 110 im Bodenteil 50 in Kombination mit den Überdruckventilen oder Berstmembranen 120 dafür, dass sich der Überdruck in kontrollierter Weise abbauen kann. Durch die vorgesehene Abkühlung der Rauchgase 210 wird die Brandgefahr erheblich verringert.

Die Überdruckventile oder Berstmembranen 120 sind vorteilhafterweise so angebracht, dass eventuell austretende Rauchgase 210 gezielt in weniger kritische Bereiche, beispielsweise Boden, Wand oder Ähnliches, geleitet werden. Auch ist es möglich, Rauchgase gezielt durch ein Rohr oder einen Schlauch ins Freie zu leiten. Besonders vorteilhaft ist dabei, dass prinzipiell eine einzige Berstmembran, die verhältnismäßig kostenaufwendig ist, für das Gesamtsystem ausreichen kann. Insbesondere ist es in der Regel nicht erforderlich, dass jedes einzelne Batteriemodul 10 mit einer Berstmembran oder einer anderweitigen Überdrucksicherung ausgestattet ist.

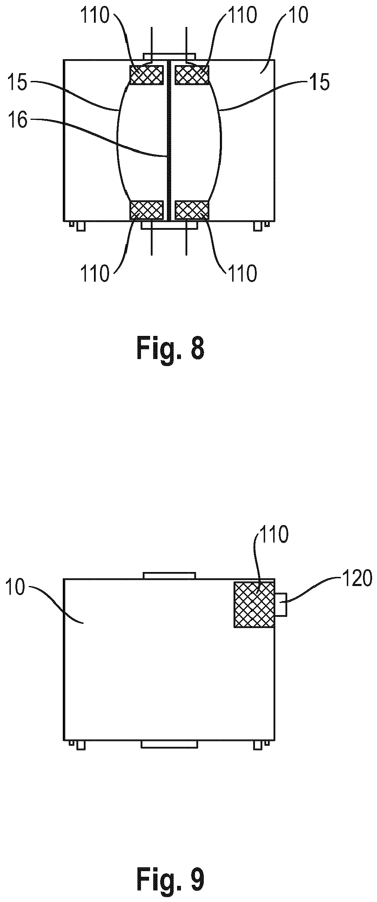

**Fig. 8** zeigt eine Ausführungsform eines Batteriemoduls 10, bei dem innerhalb des Batteriemoduls 10 mehrere Kühlmaterialdepots 110 vorgesehen sind, die im Bereich der Gasdurchtrittsöffnungen 13 (hier nicht näher dargestellt) angeordnet sind. Durch diese Maßnahme kann ebenfalls ein sehr wirksamer Schutz vor den Auswirkungen des Ausgasens einer oder weniger Energiespeicherzellen innerhalb des Batteriemoduls 10 bewirkt werden. Weiterhin ist es möglich, dass durchtretende Rauchgase durch eine Vielzahl kleiner Lüftungsöffnungen, die die Gasdurchtrittsöffnungen bilden, bereits so stark abgekühlt werden, dass ein löschender Effekt für gegebenenfalls auftretende Flammen eintritt. Die Gasdurchtrittsöffnungen können in diesem Fall auch vorteilhafterweise als Schlitze realisiert sein. Besonders vorteilhaft sind kombinierte Maßnahmen mit Kühlmaterialdepots und Lüftungsgittern beziehungsweise mit einer Matrix aus vielen kleinen Lüftungsöffnungen.

**Fig. 9** zeigt ein hermetisch dichtes *Standalone*-Batteriemodul 10, das allein durch das vorgesehene Kühlmaterialdepot 110, das sich im Bereich eines Überdruckventils oder einer Berstmembran 120 befindet, einen sehr wirksamen Brandschutz realisiert. Auch eine derartige Rauchgaskühlung bei einem *Standalone-Modul* ist von der Erfindung umfasst.

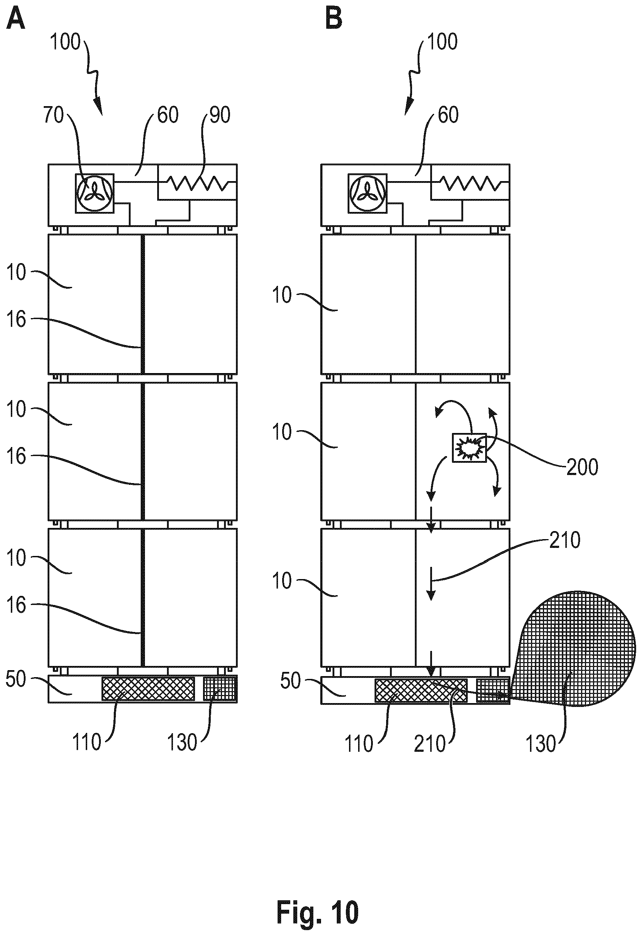

**Fig. 10** zeigt eine weitere besonders vorteilhafte Ausgestaltung des Batteriespeichersystems 100, die vergleichbar mit den vorab erläuterten Ausführungsformen eine umlaufende Kühlluftführung in einem geschlossenen System realisiert. Zusätzlich ist hier als weitere Brandschutzmaßnahme ein Auffangmittel 130 in Form eines faltbaren Beutels vorgesehen, der im Bodenteil 50 des Systems angeordnet ist. Teilfigur A zeigt den Normalbetrieb. Teilfigur B zeigt den Fehlerfall, bei dem es zu einer Entwicklung von Rauchgas 210 durch die thermisch auffällige Energiespeicherzelle 200 kommt.

Der faltbare Beutel 130 befindet sich im Normalfall im zusammengefalteten Zustand im System und entfaltet sich erst, wenn ein entsprechend hoher Druck insbesondere durch das Abblasen von einer oder mehreren Energiespeicherzellen innerhalb der Batteriemodule 10 des Systems auftritt. Der Weg der Rauchgase 210 ist durch Pfeile dargestellt.

Besonders vorteilhaft ist es, wenn die Rauchgase 210 vor dem Eintritt in den faltbaren Beutel 130 über das hier vorgesehene Kühlmaterialdepot 110 im Bodenteil 50 des Batteriespeichersystems 100 abgekühlt werden. Gegebenenfalls kann auch auf eine Abkühlung beziehungsweise das Kühlmaterialdepot 110 verzichtet werden. In diesem Fall ist es sehr sinnvoll, wenn der faltbare Beutel 130 aus einem hitzebeständigen Material gefertigt ist, so dass er nicht selbst Feuer fangen kann.

Wenn im Fehlerfall tatsächlich Rauchgase 210 auftreten und in den Beutel beziehungsweise das Auffangmittel 130 gelangen, wird der Beutel 130 aus dem Gehäuse beziehungsweise in diesem Fall aus dem Bodenteil 50 des Batteriespeichersystems 100 herausgedrückt und durch die Rauchgase 210 aufgeblasen.

## Patentansprüche

1. Batteriespeichersystem (100) mit mindestens zwei Batteriemodulen (10), die jeweils eine Mehrzahl von elektrochemischen Energiespeicherzellen aufweisen, und gegebenenfalls einem Bodenteil (50) und/oder einem Deckelteil (60), wobei das Batteriespeichersystem die folgenden Merkmale aufweist:
a. Jedes Batteriemodul (10) weist mindestens eine außenseitige Kontaktiereinrichtung (11, 12) zur Verbindung mit einem anderen Batteriemodul (10) des Batteriespeichersystems und/oder gegebenenfalls mit dem Bodenteil (50) und/oder dem Deckelteil (60) des Batteriespeichersystems auf,
b. die Kontaktiereinrichtungen (11, 12) umfassen mindestens einen, vorzugsweise mehrere Anschlüsse für Leistung und/oder Datensignale,
c. benachbarte Batteriemodule (10) innerhalb des Batteriespeichersystems sind über die Kontaktiereinrichtungen (11,12) elektrisch miteinander verbunden,
**gekennzeichnet durch** die folgenden zusätzlichen Merkmale
d. die Kontaktiereinrichtungen (11,12) sind jeweils von einer umlaufenden mechanischen Führung (14) umgeben, und
e. im Bereich der Kontaktiereinrichtungen (11, 12) innerhalb der umlaufenden mechanischen Führung (14) ist mindestens eine Gasdurchtrittsöffnung (13) vorgesehen.

2. Batteriespeichersystem nach Anspruch 1 mit dem folgenden zusätzlichen Merkmal:
a. Die Kontaktiereinrichtungen (11, 12) sind Steckverbinder.

3. Batteriespeichersystem nach Anspruch 1 oder Anspruch 2 mit dem folgenden zusätzlichen Merkmal:
a. Die mechanischen Führungen (14) der Kontaktiereinrichtungen (11, 12), über die benachbarte Batteriemodule (10) miteinander verbunden sind, greifen formschlüssig ineinander.

4. Batteriespeichersystem nach einem der vorhergehenden Ansprüche mit dem folgenden zusätzlichen Merkmal:
a. Die mechanischen Führungen (14) sind zur Abdichtung der Kontaktiereinrichtungen (11, 12) eingerichtet.

5. Batteriespeichersystem nach einem der vorhergehenden Ansprüche mit mindestens einem der folgenden zusätzlichen Merkmale:
a. Die mechanischen Führungen (14) umfassen zumindest teilweise eine umlaufende Dichtlippe.
b. Die mechanischen Führungen (14) umfassen zumindest teilweise eine Dichtungsmasse.

6. Batteriespeichersystem nach einem der vorhergehenden Ansprüche mit mindestens einem der folgenden zusätzlichen Merkmale:
a. Jedes Batteriemodul (10) weist ein Gehäuse auf, vorzugsweise ein quaderförmiges Gehäuse.
b. Auf mindestens zwei gegenüberliegenden Seiten des Gehäuses, insbesondere eines quaderförmigen Gehäuses, ist jeweils eine Kontaktiereinrichtung (11,12) angeordnet.
c. Die Batteriemodule (10) sind gestapelt oder gereiht.

7. Batteriespeichersystem nach einem der vorhergehenden Ansprüche mit mindestens einem der folgenden zusätzlichen Merkmale:
a. Innerhalb der mechanischen Führungen (14) der Kontaktiereinrichtungen (11, 12) sind jeweils zwei oder mehr Gasdurchtrittsöffnungen (13) vorgesehen.
b. Innerhalb der mechanischen Führungen (14) der Kontaktiereinrichtungen (11, 12) ist jeweils eine Gitterstruktur als Gasdurchtrittsöffnung (13) vorgesehen.

8. Batteriespeichersystem nach einem der vorhergehenden Ansprüche mit mindestens einem der folgenden zusätzlichen Merkmale:
a. Die mechanischen Führungen (14) der Kontaktiereinrichtungen (11, 12) umgrenzen einen Bereich der jeweiligen Seitenfläche des Gehäuses von bis zu 70% der Gesamtfläche der Seitenfläche.
b. Die Gasdurchtrittsöffnungen (13) einer Kontaktiereinrichtung (11,12) umfassen eine Fläche von bis zu 30% der Gesamtfläche der jeweiligen Seite des Gehäuses.

9. Batteriespeichersystem nach einem der vorhergehenden Ansprüche mit dem folgenden zusätzlichen Merkmal:
a. Das Batteriespeichersystem (100) weist mindestens einen Feuchtigkeits- und/oder Überflutungssensorauf.

10. Batteriespeichersystem nach einem der vorhergehenden Ansprüche mit mindestens einem der folgenden zusätzlichen Merkmale:
a. Das Batteriespeichersystem (100) umfasst Mittel zur Kühlung (110) und/oder Ableitung (120) von Rauchgasen (210).
b. Das Batteriespeichersystem (100) umfasst mindestens ein Überdruckventil (120).
c. Das Batteriespeichersystem (100) umfasst mindestens ein Überdruckventil mit einem integrierten Metallgitter.
d. Das Batteriespeichersystem (100) umfasst mindestens eine Berstmembran (120) als Überdrucksicherung.
e. Das Batteriespeichersystem (100) umfasst mindestens ein Kühlmaterialdepot (110).

11. Batteriespeichersystem nach Anspruch 10 mit mindestens einem der folgenden zusätzlichen Merkmale:
a. Das Kühlmaterial des Kühlmaterialdepots (110) wird von Stahlwolle und/oder Aluminiumwolle und/oder Quarzschaumgranulat und/oder einem Aluminiumkühlkörper und/oder einem offenporigen Metallschaum und/oder Steinwolle gebildet.
b. Das Kühlmaterialdepot (110) wirkt als Staubfilter.

12. Batteriespeichersystem nach einem der vorhergehenden Ansprüche mit dem folgenden zusätzlichen Merkmal:
a. Das Batteriespeichersystem (100) ist mit mindestens einem Zugang für ein Löschmittel ausgestattet.

13. Batteriespeichersystem nach einem der vorhergehenden Ansprüche mit dem folgenden zusätzlichen Merkmal:
a. Das Batteriespeichersystem (100) umfasst mindestens ein Auffangmittel (130) für entweichende Rauchgase (210), wobei vorzugsweise das Auffangmittel (130) ein entfaltbarer Beutel, insbesondere ein Beutel aus hitzebeständigem Material, ist.

14. Batteriemodul (10) mit mindestens einer Kontaktiereinrichtung (11, 12) zurVerbindung mit einem anderen Batteriemodul (10) eines Batteriespeichersystems (100) und/oder gegebenenfalls mit einem Bodenteil (50) oder einem Deckelteil (60) eines Batteriespeichersystems (100), wobei die mindestens eine Kontaktiereinrichtung (11,12) mindestens einen, vorzugsweise mehrere Anschlüsse für Leistung und/oder Datensignale umfasst, **gekennzeichnet durch** die folgenden zusätzlichen Merkmale:
a. Die mindestens eine Kontaktiereinrichtung (11,12) ist von einer umlaufenden mechanischen Führung (14) umgeben.
b. Im Bereich der Kontaktiereinrichtung (11, 12) ist innerhalb der umlaufenden mechanischen Führung (14) mindestens eine Gasdurchtrittsöffnung (13) vorgesehen.

15. Batteriemodul nach Anspruch 14 mit dem folgenden zusätzlichen Merkmal:
a. Das Batteriemodul (10) weist mindestens eines der Merkmale gemäß einem der Ansprüche 2 bis 8 auf.

16. Batteriemodul nach Anspruch 14 oder Anspruch 15 mit dem folgenden zusätzlichen Merkmal:
a. Das Batteriemodul (10) umfasst Mittel zur Kühlung (110) und/oder Ableitung (120) von Rauchgasen (210) und/oder mindestens ein Auffangmittel (130) für entweichende Rauchgase.
